# EUROPEAN PATENT APPLICATION

(11) **EP 4 539 603 A1**
(43) Date of publication of application: **16.04.2025**
(21) Application number: 23315384.0
(22) Date of filing: 12.10.2023
(51) Int. Cl.: H05B 45/14

(54) **LED CIRCUIT BREAKER, LED ILLUMINATOR AND IRIS SCANNER**

(71) Applicant: THALES DIS FRANCE SAS, 92190 Meudon (FR)
(72) Inventor: Capomaggio, Grégory, 13360 ROQUEVAIRE (FR); Buton, Christophe, 13420 GEMENOS (FR); Lea, Lorenzo, 10015 IVREA (TO) (IT)
(74) Representative: Quintero Romero, Manuel

(57) **Abstract**

The invention relates to a LED circuit breaker (23) intended to be mounted serially between a LED driver (21) and a LED source (22), the LED circuit breaker (23) comprising:
- a controlled switch (231) serially mounted between the LED driver (21) and a LED source (22) for closing or opening the circuit,
- a sensor (232) measuring the power provided by the LED driver (21) to the LED source (22), the sensor (232) providing a measure,
- a control circuit (233) connected to the sensor (232) for receiving the measure and connected to the controlled switch (231) for controlling said switch, the control circuit (233) being configured for:
∘ making a time integration of the measure for obtaining an illumination value (CNT) representative of a quantity of illumination,
∘ opening the controlled switch (231) when the illumination value exceeds a predetermined threshold.

## Description

### TECHNICAL FIELD

The invention related to a light emission diode (LED) circuit breaker and to a LED circuit incorporating such a breaker. More particularly, the breaker of the invention is used for limiting the emission of LED light corresponding to dangerous level. The invention relates also to a LED illuminator for an iris scanner.

### BACKGROUND OF THE INVENTION

LED light is used for many applications. LED light is used in iris scanner for illuminating the iris. Recently, near infra-red (IR) seems better for having more details an image of the iris for people authentication. Near IR is invisible to human eyes so there is no reflex for shutting the eyelids nor the pupils if the IR illumination is too important. The intensity and the time of exposure to IR can damage the retina. On another hand, the intensity and time of exposure is generally driven by the image quality, one or more images being used for setting the exposure time of an image sensor. So, there is a need to prevent damageable IR exposure for the eyes.

### SUMMARY OF THE INVENTION

The present invention provides a solution for all the problems by a LED circuit breaker according to claim 1, a LED circuit according to claim 7, and an iris scanner according to claim 8. In dependent claims, preferred embodiments of the invention are defined.

In a first inventive aspect, the invention provides a circuit breaker intended to be placed between a LED driver and LEDs which measure in time the power driving the LEDs for breaking the LED circuit if the time of exposure is too important.

Particularly, the invention is a LED circuit breaker intended to be mounted serially between a LED driver and a LED source. The LED circuit breaker comprises a controlled switch, a sensor, and a control circuit. The controlled switch serially is mounted between the LED driver and a LED source for closing or opening the circuit, The sensor is measuring the power provided by the LED driver to the LED source. The sensor is providing a measure. The control circuit is connected to the sensor for receiving the measure and connected to the controlled switch for controlling said switch. The control circuit being configured for making a time integration of the measure for obtaining an illumination value representative of a quantity of illumination, and for opening the controlled switch when the illumination value exceeds a predetermined threshold.

For taking into consideration resting time between two illumination periods, the control circuit can be configured for decreasing the illumination value when the measure is equal to zero.

Preferentially, the decreasing of the illumination value can be made according to a constant slope in time.

In a preferred embodiment, the sensor can be a current sensor, and the measure is a current measure.

For avoiding a disfunction linked to the power supply of the LED driver, said LED circuit breaker can be insulated from the LED driver and the LED source, the controlled switch being of a relay type and the current sensor being a Hall effect sensor.

For insisting on the possible danger of over exposition, the control circuit can be configured to need to be reset by an external action of an operator after the opening of the controlled switch for allowing to close again the controlled switch.

In a second aspect, the invention provides a LED circuit comprising a LED driver and at least one LED source connected to the LED driver, wherein the LED circuit comprises the LED circuit breaker according to the first aspect of the invention.

In a third aspect, the invention provides an iris scanner comprising a central unit connected to a camera, to an illuminator, and to a user interface, the central unit controlling the illuminator and the camera for taking identification image of an iris placed in front of the camera, and illuminated by the illuminator, wherein the illuminator is a LED circuit according to the second aspect of the invention.

According to a specific embodiment, the camera is an infrared camera, and the LED source comprises infrared LEDs.

For avoiding voltage coupling between the different elements, the central unit can be connected to the control circuit of the LED circuit breaker through insulating coupler, and wherein the LED circuit breaker comprises an insulated power supply for providing a power supply to components of the LED circuit breaker which is galvanically independent of the power supply of the LED driver, the central unit, and the camera.

All the features described in this specification (including the claims, description and drawings) and/or all the steps of the described method can be combined in any combination, with the exception of combinations of such mutually exclusive features and/or steps.

### DESCRIPTION OF THE DRAWINGS

These and other characteristics and advantages of the invention will become clearly understood in view of the detailed description of the invention which becomes apparent from a preferred embodiment of the invention, given just as an example and not being limited thereto, with reference to the drawings.
Figure 1 shows a block diagram of an iris scanner implementing the invention,
Figure 2 details a first embodiment of an illuminator according to the invention,
Figure 3 shows an example of energy counter used in the embodiment of figure 2,
Figure 4 details a second embodiment of an illuminator according to the invention,
Figure 5 shows a flow chart implemented by a control circuit of the embodiment of figure 4,
Figure 6, figure 7, figure 8 and figure 9 shows different signal diagrams corresponding to different cases of use of the invention.

### DETAILED DESCRIPTION OF THE INVENTION

As it will be appreciated by one skilled in the art, aspects of the present invention may be embodied as a LED circuit breaker, a LED circuit, or an iris scanner.

For simplifying the explanation of the invention, same references can be used in several drawings if they correspond to same elements or to similar elements. For avoiding repetition, the elements previously described in one figure will not be described again except if they have some modification in another figure.

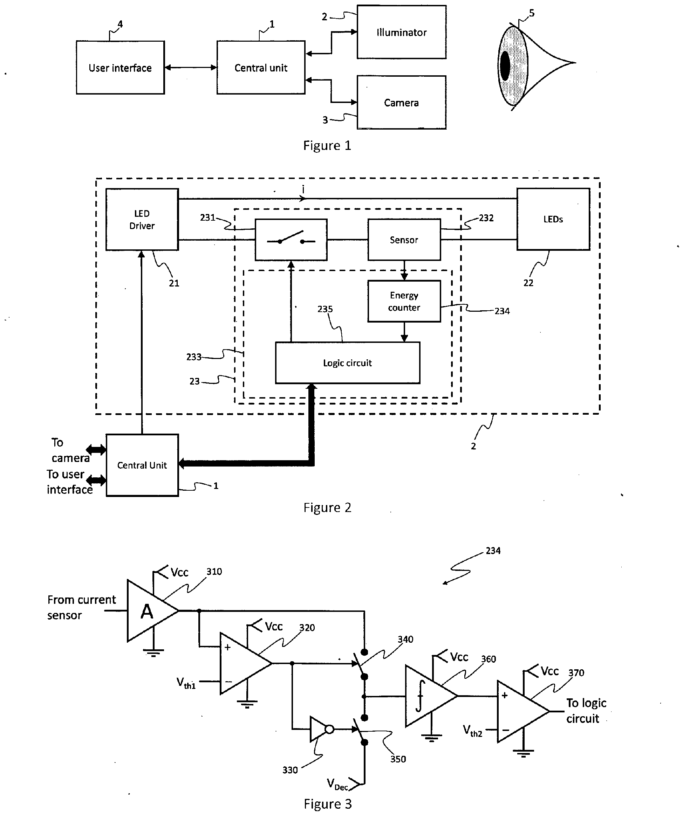

First, **figure 1** corresponds to a block diagram of an iris scanner implementing the invention. The iris scanner comprises a central unit 1, for example a personal computer, connected through communication interfaces to an illuminator 2, a camera 3, and a user interface 4. The camera 3 is preferentially an infrared camera. The choice of infrared camera enables to have the more distinctive details of the iris but another kind of camera for visible or invisible light can be used. The camera 3 is connected to the central unit 1 through a standard communication interface used for video, for example USB. The illuminator 2 is a controlled flash lamp connected to the central unit 1 through a standard interface for providing on demand of the central unit 1 a flash of light having an intensity and a duration controlled by the central unit 1. In the preferred example, the flash of light is a flash of infrared light, but it could be another kind of light, the importance is that the light of the illuminator 2 matches the light sensitivity of the camera 3. The user interface 4 can comprise a display, a keyboard, a mouse, and any possible interface that enables a user to interact with a computer. Depending on the use of the iris scanner, the user interface can be controlled by an operator or can be part of an autonomous system for allowing person to pass a control gate.

For an iris scanner under control of an operator, a person should place his eye 5 in front of the illuminator 2 and the camera 3. Then, the operator indicates through the user interface 4 to take an iris image. The central unit 1 will send simultaneous commands to the camera 3 and to the illuminator 2. The illuminator 2 illuminates the eye 5 during few milliseconds which corresponds to an exposure time for the camera 3. The image is transferred from the camera to the central unit 1 which determinate by image processing if the image is good or not. If the image is too dark, commands are sent to the illuminator to increase the time of the flash for having more light and other commands are sent for taking a new picture. The image can be badly framed, so a message can be sent to the user for making the person to move the eye 5 forward, backward, toward left or right, and another image can be taken. Sometimes more than five images can be taken for having a good iris image.

For an autonomous system, the user interface can further comprise a detection camera that can be a stereoscopic camera. When a person is detected by the detection camera, the display can print guiding messages for the person in such a way to be correctly positioned in front of the camera 3. When the detection camera detects a good position of the head, the user interface can trigger the central unit 1 for taking an iris image. The central unit 1 controls the camera 3 and the illuminator 2 as previously indicated with the system controlled by an operator. Several images can be taken with an adjustment of exposure time if the image is too dark. The iris image can be badly framed, so a message can be sent to the person for making the person to move his eyes 5 forward, backward, toward left or right, and other images can be taken till an iris image is correct. Several images can be taken for having a good iris image. In comparison with an iris system controlled by an operator, the number of images taken by an autonomous system can be more important and the image captures can be faster.

As indicated, the use of infrared imaging enables to have more details of the iris on the picture. Nevertheless, infrared may damage the retina if the exposure to infrared is too important. In addition, the eye has no defensive reflex for protection against infrared. Normally a flash of infrared is sufficiently short in time to be safe for the subject but the adjustment of the exposure time and the taken successively of several images may sometimes exceed the safety level for human eye.

According to the invention, the illuminator 2 uses LEDs in combination with a LED circuit breaker more detailed in relation with figure 2. The **figure 2** details a first embodiment of the illuminator 2. According to the invention, the illuminator 2 comprises a LED driver 21, a LED source 22, and a LED circuit breaker 23. The LED driver 21 can be of different known type providing either a controlled current or voltage, which can be pulsed or not. The LED driver can be controlled through a standard serial link. Many LED drivers are well known in the art and any type of driver can be used with the invention, so it not described in detail. The LED source 22 comprises several LEDs mounted serially or in parallel and possibly cooperating with optics for focusing the LED light. In the present example, LEDs are infrared LEDs, and the only important thing is to know the relation between the global electric power provided to the LED and the global luminosity power provided by the LED. The person skilled in the art will easily compute the ratio between electric and luminosity power as a function of the number of LEDs and of the chosen LEDs.

The LED circuit breaker comprises a controlled switch 231, a sensor 232, and a control circuit 233. The controlled switch 231 serially mounted between the LED driver 21 and a LED source 22 for closing or opening the circuit between them. The controlled switch 231 can be any type of switch that can be electrically controlled like any kind of power transistor, relay, or other. The sensor 232 is placed on the LED circuit for measuring the power provided by the LED driver 21 to the LED source 22. For simplifying the sensor 232 and considering that the power of luminosity is directly linked to the current i crossing the LEDs, the sensor 232 can be a current sensor of any type. The sensor 232 is placed on a conductor linking the LED driver 21 to the LED source 22 for providing a measure, which is for example a voltage proportional to the current passing through said conductor.

The control circuit 233 is connected to the sensor 232 for receiving the measure, connected to the controlled switch 231 for controlling said switch, and connected to the central circuit 1 for exchanging information through a standard communication interface. In this first embodiment, the control circuit 233 comprises an energy counter 234 and a logic circuit 235. The energy counter 234 makes a time integration of the measure for obtaining an illumination value representative of a quantity of illumination and for triggering an alarm signal when the quantity of illumination exceeds a safe time of exposition. The logic circuit 235 is connected to the energy counter 234, to the controlled switch 231 and to the central unit 1. The logic circuit 235 is configured for controlling the controlled switch 231 according to the alarm signal and to the commands received from the central unit 1. The logic circuit 235 closes the controlled switch 231 in reaction to the receipt of a start signal from the central unit 1, and it opens the controlled switch 231 in reaction to the activation of the alarm signal. In addition, the logic circuit 235 sends a message to the central unit 1 when the alarm signal is activated.

The infrared light is dangerous for the eye 5 if the quantity of infrared energy received by the eye 5 is too important during a time period. The energy counter 234 is a circuit for counting the emitted energy in time for not exceeding the energy that can be received by the eyes during this time period. An example of energy counter 234 is shown on **figure 3**.

The energy counter comprises an amplifier 310, a first comparator 320, an inverter 330, a first switch 340, a second switch 350, an integrator 360, and a second comparator 370. The amplifier 310 is a standard amplifier having an input connected to the sensor 232, and an output providing a signal proportional to the value of measure. The first comparator 320 comprises a first input, a second input, and an output. The first input of the first comparator 320 is connected to the output of the amplifier 310 and the second input receives a first threshold voltage Vₜₕ₁. The output of the first comparator 320 provides an active signal when the voltage on its first input is higher than the first threshold voltage Vₜₕ₁, and an inactive signal when the voltage on its first input is lower than the first threshold voltage Vₜₕ₁. The role of this first comparator 320 is to determine that the measure indicates if there is a current i flowing through the LED source 22, so the first threshold voltage Vₜₕ₁ is a positive voltage close to zero volt but sufficiently high for eliminating spurious signals in such a way that the output of the first comparator 320 is active each time the measure of the current is not equal to zero.

The first and second switches 340 and 350 are controlled switches having a control input and first and second terminals. The first and second switches 340 and 350 close the circuit between their first and second terminals when the control input receives an active signal, and the first and second switches 340 and 350 open the circuit between their first and second terminals when the control input receives an inactive signal. The control input of the first switch 340 is connected directly to the output of the first comparator 320, and the control input of the second switch 350 is connected to the output of the first comparator 320 through the inverter 330. The first terminal of the first switch 340 is connected to the output of the amplifier 310. The second terminal of the first switch 340 is connected to the first terminal of the second switch 350. The second terminal of the second switch 350 is connected to a reference voltage V_{Dec}.

The integrator 360 is a standard integrator having an input and an output. The integrator 360 provides at its output a signal which is the time integral of the signal present at its input. The input of the integrator 360 is connected to the second terminal of the first switch 340 and to the first terminal of the second switch 350 for receiving either the signal provided by the output of the amplifier 310 or the reference voltage V_{Dec}. The reference voltage V_{Dec} is a negative voltage that makes decreasing the output signal of the integrator 360 while the signal coming from the amplifier 310 increases the output signal of the integrator 360.

The second comparator 370 comprises a first input, a second input, and an output. The first input of the second comparator 370 is connected to the output of the integrator 360 and the second input receive a second threshold voltage Vₜₕ₂. The output of the second comparator 370 provides the alarm signal. The second threshold, voltage Vₜₕ₂ is a voltage corresponding to a maximum of energy received by an eye during a time period.

Before explaining on concrete cases how the circuit is functioning, the person skilled in the art can note that such an analog circuit is relatively complex to develop and to adjust. The adjustment of the time constant of integrator 360 needs to change a capacitor and/or a resistor which must be very accurate. In addition, changing the decreasing time of the integration signal needs to change the reference voltage V_{Dec}, which needs an adjustable signal generator of negative voltage. And finally, the amplifier 310 and the integrator 360 can be sensitive to variation of the supply voltage Vcc.

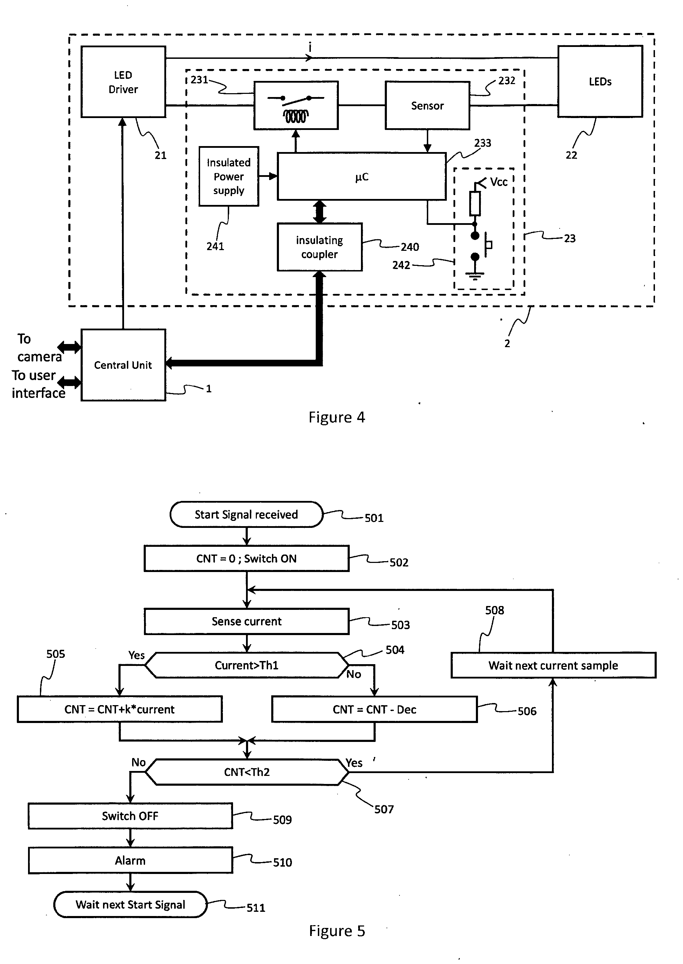

The **figure 4** shows a second embodiment of the illuminator 2 according to the invention. This second embodiment solves the problems enumerated before by proposing a digital circuit. The second embodiment differs from the embodiment of figure 2 in that the control circuit 233 is a microcontroller. The microcontroller is a standard one that must comprise at least one analog input for receiving the measure from the sensor 232, at least one output for controlling the controlled switch 231 and a standard communication port for exchanging data with the central unit 1.

Digital circuits can be also sensitive to the supply voltage and to overvoltage coming from other circuit. We propose an amelioration, which can be also used in the first embodiment, and which is to totally insulate the LED circuit breaker 23 from all other elements of the illuminator 2 and of the central circuit 1. Such an insulation is made by using a controlled switch 231 only of a relay type, i.e., mechanical relay or a solid-state relay. The sensor 232 can be a Hall effect current sensor. The connection between the control circuit 233 and the central unit 1 can be made through insulating couplers 240, for example optocouplers, or through a magnetic contactless link. An insulated power supply 241 is used for supplying the control circuit 233 and for power supplying to any element of the LED circuit breaker 23. Such an insulated power supply 241 can be a well-known DC/DC converter using a transformer between the power input and the power output, the DC/DC converter being coupled to the power supply circuit of the LED driver 21.

Optionally, the start signal closing the controlled switch 231 can be managed directly by the LED circuit breaker 23 instead to be sent by the central circuit 1. A push button circuit 242 can provide the start signal to the control circuit 233. Such a solution needs more movements of the operator in such a way to be sure a restart takes a minimum of time and that the operator realizes there was an abnormal situation. Such option is particularly interesting for autonomous system because an autonomous system cannot have an input user interface and because an operator can then assist the person for making an iris image capture, a misconducting of a person being the cause of too many image captures.

The use of a microcontroller necessitates to have a program to run. The **figure 5** shows an example of flow chart that can be executed by the microcontroller for monitoring the current and raising an alarm signal if necessary.

The flowchart of figure 5 starts with the end of an idle step 501 that corresponds to the reception of a start signal either coming from the central unit 1 or from the push button circuit 242. Once the start signal is received, a first step 502 resets a counter value CNT to zero and switches on the controlled switch 231.

In a second step 503, the measure of current i is sampled on the input of the microcontroller and is converted into a digital data representative of the measured current i. A first test step 504 makes the comparison of the measured current i with a first threshold Th1. The first threshold Th1 corresponds to a small value close to zero but sufficiently high for eliminating spurious measures. As an example, the first threshold can be equal to half a percent of a nominal current for lighting the LEDs for determining if a real current is flowing through the LEDs or not. If the measured current I is higher than the first threshold Th1, then a third step 505 is performed, and if the measured current i is not higher than the first threshold Th1, then a fourth step 506 is performed. The third step 505 consists in the increasing of the counter value CNT of the measured current value, eventually multiplied by a coefficient k, the coefficient k can be equal to 1 or any other value depending on the size in bits of the counter value CNT. The fourth step 506 consists in the decreasing of the counter value CNT of a decreasing value Dec. Of course, the lowest counter value is equal to zero and if the result of the decreasing should be lower than zero then the resulting of the counter value CNT is zero.

After the third or fourth step 505 or 506, a second test step 507 is performed for comparing the counter value CNT with a second threshold Th2. The second threshold Th2 corresponds to a maximum value of the counter representative of a maximum energy allowed for an eye during a time period. While the counter value CNT is lower than the second threshold Th2, a fifth step 508 is performed. If the counter value CNT is not lower than the second threshold Th2, then a sixth step 509 is performed. The fifth step 508 is a temporization corresponding to the sampling period before performing again the second step 503. Typically, a sampling period of one microsecond enables to have a good accuracy for measuring signals having a duration in the order of the millisecond. The sixth step 509 consists in switching off the controlled switch 231. An alarm signal is sent in a seventh step 510, following the sixth step 509. After the seventh step 510, the program stay in an idle step 511 until a next start signal is received. Idle steps 501 and 511 can be a same Idle step. Eventually, the idle step 511 can comprise a time counter during which it is not possible to return to the idle for receiving the start signal.

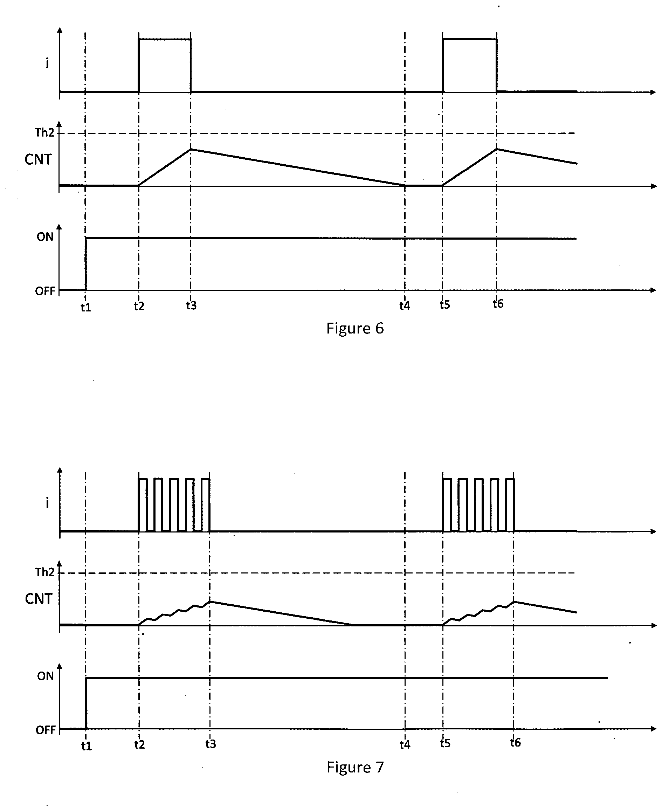

A person skilled in the art can realize that the first and second embodiment performs the same signal processing, one being analog and the other being digital. The figures 6 to 9 shows time charts corresponding to different use cases of the invention, same signals being represented on each figure. The time chart on top represents the value of the current i flowing through the LED source 22. The counter value CNT is represented on the time chat located in the middle. The state value (ON-OFF) of the controlled switch 231 is represented at the bottom.

The **figure 6** corresponds to a normal use case using illumination periods with constant current. At a time t1, the start signal is received and the controlled switch 231 is switched on. At time t2, the LED driver 21 starts to send current to the LED source 22. The counter value CNT increases for each period of sampling. At time t3, the LED driver 21 stops to send current to the LED source 22. The counter value CNT decreases for each period of sampling of the decreasing value Dec. The counter value CNT reaches the value zero at the time t4. The LED driver 21 sends again current at time t5. The counter value CNT increases till time t6 wherein the LED driver 21 stops to send current. The counter value CNT decreases after t6. In this example, the counter value never reaches the second threshold value Th2. The illumination periods between t2 and t3 and between t5 and t6 never extend over the maximum time of illumination, and there is a safe waiting time between two periods of illumination.

The **figure 7** corresponds to a normal use case using illumination periods with a regulation of current made by pulse wide modulation. This case differs from the previous one in that the illumination periods between t2 and t3 and between t5 and t6 comprise several current pulses. For each pulse, the counter value CNT increases. Between two pulses, the counter value CNT decreases. During an illumination period, the counter value CNT increases to a value representative of the quantity of energy emitted minus few decreasing periods during which the eye was not illuminated. Apart this difference, the time charts are identical than those of figure 6.

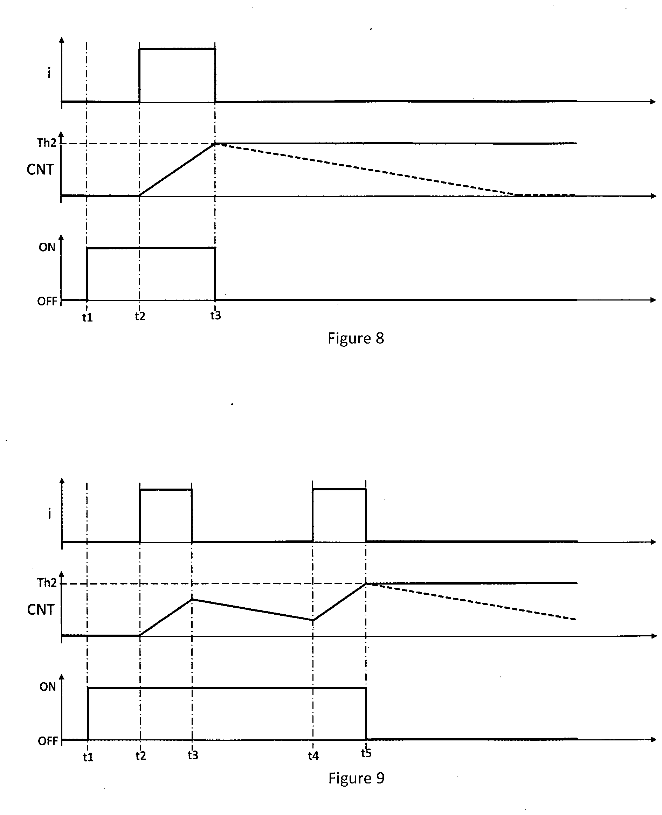

The figures 8 and 9 illustrate use cases in which a possible excess of illumination can occurs. The **figure 8** illustrates a use case in which an illumination period is too long. This case can occur in case of wrong parameters enters by an operator in the central unit 1. At a time t1, the start signal is received and the controlled switch 231 is switched on. At time t2, the LED driver 21 starts to send current to the LED source 22. The counter value CNT increases for each period of sampling. At time t3, the counter value reaches the second threshold Th2 and the controlled switch 231 is switched off, cutting the current at same time. The counter value stays at the threshold value till a new start signal. In this case, the period of illumination is stopped by the LED circuit breaker 23 for not exceeding a maximum value of time illumination.

The **figure 9** illustrates a use case in which illumination periods are not sufficiently spaced, or when too many image captures are made successively. This use cases can be more frequent than the previous one, for example, when several illumination periods are triggered successively due to automatic setting of the camera 3 by the central unit 1, and due to a person moving during the image captures. For autonomous system, a person who does not follow the indications can also cause the system to multiply the number of image captures. At a time t1, the start signal is received and the controlled switch 231 is switched on. At time t2, the LED driver 21 starts to send current to the LED source 22. The counter value CNT increases for each period of sampling. At time t3, the LED driver 21 stops to send current to the LED source 22. The counter value CNT decreases for each period of sampling of the decreasing value Dec. At time t4, the LED driver 21 sends again current while the counter value has not yet reached the value zero. So, the counter value CNT increase from a non-zero value. At time t5, the counter value reaches the second threshold Th2 and the controlled switch 231 is switched off, cutting the current at same time. The counter value stays at the threshold value till a new start signal. It can be noted that the second illumination period starting at time t4 was too long in view of the resting period between time t3 and t4. If the LED driver 21 stops the illumination period before the counter value CNT reaches the second threshold Th2, then we stay in a normal use case. This case can occur after more than two successive illumination periods starts before the counter value reaches the zero value.

The person skilled in the art can note that there are decreasing slopes in dotted line on figures 8 and 9. These slopes corresponds to the value of the signal at the output of the integrator 360 which corresponds to the counter value CNT. Effectively, when the current is cut, the integrator continues the integration with the decreasing voltage V_{Dec}. This is the only difference between the two embodiments.

For this signal processing, two important values should be defined, one being the decreasing voltage V_{Dec} or value Dec and the other is the second threshold Vth2 or Th2. These values are choice of the man of the art depending on the possible damages that could be caused by infrared to retina, and on the characteristics of the LED source 22. The maximum infrared power received by an eye is variable depending on the exposure time. Typically, an eye can support a power of infrared more important for a short time than for a longer time, but the damageable energy (time integration of the power) is less important for short time than for long time. The relation between the power provided to the LED source 22 and received by the eye 5 depends on the diffusion angle of the optics opening of the LED source 22 and of the distance between the LED source 22 the eye 5. Commonly, the emitted power and the exposure time to infrared is not damageable but could be damageable if there are fast repetition and/or excessive exposure time. A maximum of safe power and a safe exposure time should be defined by the person skilled in the art. The LED breaker circuit of the invention will only verify that the exposure time never exceed the maximum exposure and that the eye has sufficient resting time before receiving a new exposure to IR. The second threshold Th2 can corresponds to an energy equal to the maximum of safe power during the maximum of a safe exposure period. Then the decreasing value is defined for decreasing the second threshold value Th2 to zero during a maximum resting time according to a constant slope. The maximum resting time can be set to a time value sufficiently long for considering that a maximum of energy corresponding to the second threshold Th2 can be received again without damage.

In the present specification, it is presented an iris scanner for taking image with infrared LED. Nevertheless, the invention is not limited to iris scanner and can be used in other device using LED illumination possibly damageable. The LED circuit breaker is not limited to be use with infrared LED and it can be used for other LED circuits wherein an excess of luminosity can be dangerous. It can be used with very luminosity of visible light or for UV light.

In addition, many other modifications can be made without departing of the claimed invention. For example, in the described embodiments, the alarm signal is only sent to the central unit. The central unit may trigger a message, or a sound. But the LED circuit breaker could also emit a sound signal and can light on a visual signal in addition to, or in replacement of the sending of the alarm signal to the central unit.

## Claims

1. A LED circuit breaker (23) intended to be mounted serially between a LED driver (21) and a LED source (22), the LED circuit breaker (23) comprising:
- a controlled switch (231) serially mounted between the LED driver (21) and a LED source (22) for closing or opening the circuit,
- a sensor (232) measuring the power provided by the LED driver (21) to the LED source (22), the sensor (232) providing a measure,
- a control circuit (233) connected to the sensor (232) for receiving the measure and connected to the controlled switch (231) for controlling said switch, the control circuit (233) being configured for:
- making a time integration (505) of the measure for obtaining a illumination value (CNT) representative of a quantity of illumination,
- opening (509) the controlled switch (231) when the illumination value exceeds a predetermined threshold (V_{Th2}, Th2).

2. The LED circuit breaker of claim 1, wherein the control circuit (233) is configured for decreasing (506) the illumination value when the measure is equal to zero.

3. The LED circuit breaker of claim 2, wherein the decreasing of the illumination value is made according to a constant slope in time.

4. The LED circuit breaker of one of the claims 1 to 3, wherein the sensor (232) is a current sensor, and the measure is a current measure.

5. The LED circuit breaker of one of the claims 1 to 4, wherein said LED circuit breaker (23) is insulated from the LED driver (21) and the LED source (22), the controlled switch (231) being of a relay type and the sensor (232) being a Hall effect sensor.

6. The LED circuit breaker of one of the claims 1 to 5, wherein the control circuit (233) is configured to need to be reset by an external action of an operator after the opening of the controlled switch (231) for allowing to close again the controlled switch (231).

7. A LED circuit comprising a LED driver (21) and at least one LED source (22) connected to the LED driver (21), wherein the LED circuit comprises the LED circuit breaker (23) of one of the claims 1 to 6.

8. An iris scanner comprising a central unit (1) connected to a camera (3), to an illuminator (2), and to a user interface (4), the central unit (1) controlling the illuminator (2) and the camera (3) for taking identification image of an iris (5) placed in front of the camera (3), and illuminated by the illuminator (2), wherein the illuminator (2) is a LED circuit according to one of the claims 1 to 6.

9. The iris scanner of claim. 8, wherein the camera (3) is an infrared camera, and the LED source (22) comprises infrared LEDs.

10. The iris scanner of claim 8 or 9, wherein the central unit (1) is connected to the control circuit (233) of the LED circuit breaker (23) through insulating coupler (240), and wherein the LED circuit breaker (233) comprises an insulated power supply (241) for providing a power supply to components of the LED circuit breaker (23) which is galvanically independent of the power supply of the LED driver (21), the central unit (1), and the camera (3).
